Europäisches Patentamt

European Patent Office

Office européen des brevets

(19)

(11) **EP 0 833 114 A1**

(12) **EUROPEAN PATENT APPLICATION**
published in accordance with Art. 158(3) EPC

(43) Date of publication:
01.04.1998 Bulletin 1998/14

(51) Int. Cl.$^6$: **F24J 3/00**

(21) Application number: 95925177.8

(86) International application number:
PCT/RU95/00070

(22) Date of filing: 18.04.1995

(87) International publication number:
WO 96/33374 (24.10.1996 Gazette 1996/47)

(84) Designated Contracting States:
AT BE CH DE DK ES FR GB GR IE IT LI LU MC NL
PT SE

(71) Applicant:
Advanced Molecular Technologies, L.L.C.
Westlake Village, California 91361 (US)

(72) Inventor:
SELIVANOV, Nikolai Ivanovich
Ekaterinburg, 620027 (RU)

(74) Representative:
Wagner, Karl H., Dipl.-Ing.
WAGNER & GEYER
Patentanwälte
Gewürzmühlstrasse 5
80538 München (DE)

(54) **METHOD OF HEATING A LIQUID AND A DEVICE THEREFOR**

(57) Method and device for fluid heating (FIG.1) by acting with mechanical vibrations, comprising supply of fluid into the space (1) of the rotating working wheel (2), discharge of fluid into the circular chamber (4), formed by the working wheel and the stator (7) through a series of outlet openings (8), and outflow of fluid. During this, preferred empirical relationships are observed:

$$R = 1.1614 \, K \, (mm),$$

$$\Delta R = 1.1614 \, B \, (mm) \text{ and}$$

$$n = 3.8396 \, K^{-1.5} \cdot 10^6 \, (r.p.m.), \text{ where}$$

R is the radius of the peripheral cylindrical surface of the working wheel,
$\Delta R$ is the radial size of the circular chamber,
n is the frequency of the working wheel rotation,
K is the number of the outlet openings of the working wheel,
B is the integer in the range of 1 ... K/5.

FIG. 1

## Description

BACKGROUND OF THE INVENTION

The present invention relates to means of producing and utilizing heat formed otherwise than as the result of combustion and deals directly with the method and device for fluid heating by processing with the help of mechanical action.

Of a common knowledge in technology is the effect of fluid heating as the result of inevitable or accompanying mechanical action thereon of such forces as, in particular, friction forces during contact with containing means, inner friction forces during fluid flow turbulization, forces arising during hydraulic impacts and cavitation. In such cases the energy expended for fluid heating is considered as natural energy losses.

Also widely known in technology is the effect of fluid heating as the result of deliberate, but not pursuing the purpose of heating, action thereon of mechanical vibrations of the sonic or ultrasonic range. In this case, too, the energy expended for fluid heating is traditionally considered as natural energy losses. In particular, from the state of art (V.I. Bigler et al., "Dispersion of Some Materials in Hydraulic Siren Type Device", in collection of scientific works No. 90 of Moscow Institute of Steel and Alloys "Application of Ultrasonics in Metallurgy", "Metallurgy" Publishers, 1977, pp. 73...76), the effect of fast fluid heating in the so-called hydrodynamic siren type device is known. This device comprises a working wheel having a space with an intake opening for fluid supply and a series of outlet openings, equidistant along the circumference, made in the working wheel peripheral wall with a conical outer surface, and a stator having a space with a discharge opening for fluid outflow and a series of inlet openings, equidistant along the circumference, made in the stator wall adjoining the working wheel peripheral wall with a minor clearance, both series of openings of the working wheel and the stator lying in the same rotation plane. During rotation of the working wheel the fluid flowing from the outlet openings of the working wheel towards the inlet openings of the stator is subjected to action of forced mechanical vibrations of a definite frequency, dependent on the rotation frequency of the working wheel and the number of the outlet openings thereof. In the given case, excitation of said vibrations in the fluid pursued merely the objectives of dispersing the material contained in the fluid. Nevertheless, the authors have noted the fact of abnormally fast fluid heating, which they explained as due to elevated hydraulic resistance during overflow of fluid from the working wheel space into the stator space, attaching no importance to the quantitative side of this phenomenon.

From the state of art is also known a method of fluid heating (International Application No. PCT/RU92/00194 as of 1992) by processing by means of mechanical vibrations, including the supply of the fluid to be processed into the space of the rotating working wheel; setting the fluid in rotation together with the working wheel; discharge of the fluid from the space of the working wheel through a series of outlet openings made on the peripheral cylindrical surface thereof; intake of the fluid into the stator space through at least one inlet opening made in the stator concentric surface adjoining the peripheral cylindrical surface of the working wheel with a minimum clearance; whereby a periodical abrupt interruption of the fluid flow is accomplished, exciting mechanical vibrations therein. As a result of such a processing the fluid delivered into the stator space, as has been determined by the authors, is heated to a greater extent than it may be explained by total hydraulic losses. However, this fundamentally revealed effect of abnormal fluid heating was neither sufficient, nor stable in order to utilize it with assured success for practical purposes. The reason for this may lie in improper choice of the process parameters, namely the working wheel rotation frequency and its interrelation with the geometric dimensions and the number of the working wheel outlet openings.

Considering this, the author of the present invention worked out earlier an improved method and device for fluid heating according to U.S. Patent Application No. 08/218620 as of 03/1994. According to this Application, the method includes the supply of the fluid to be processed into the space of the rotating working wheel; setting the processed fluid in rotation together with the working wheel; discharge of the fluid from the space of the working wheel through a series of outlet openings made on the peripheral cylindrical surface thereof, intake of the fluid into the stator space through at least one inlet opening made on the stator concentric surface adjoining the peripheral cylindrical surface of the working wheel with a minimum clearance; whereby a periodical abrupt interruption of the fluid flow is accomplished, exciting mechanical vibrations therein. According to the information available, an attempt was made here for the first time to express mathematically the preferred dependency between the linear velocity of the fluid along the circumference of a definite radius and this radius as an empirical relationship

$$RV^2 = 253.264 \ (m^3/s^2).$$

The device embodying the described method of fluid heating comprises a rotor, including a shaft running in bearings; a working wheel connected to a shaft and made as a disc with a peripheral annular wall having cylindrical inner and outer surfaces, wherein a series of openings is made for fluid passage, equidistant along the circumference; a stator containing the working wheel, said stator having an intake opening for supplying the fluid and a discharge opening for letting out the fluids and two concentric walls adjoining the peripheral annular wall of the working wheel at both sides with a minimum clearance; in both concentric walls of the stator at least one opening is made for fluid passage, lying in the location plane of the series of openings of the working wheel.

The described method and device for fluid heating, though ensuring the rise of fluid temperature to a greater value than that attainable at the expense of hydraulic losses, still do not allow to execute in practice with confidence the inventor's intention with utmost efficiency. The reason is apparently in the absence of adequate determination in specifying the position of circumference of radius R, whereas simultaneously the value of $RV^2$ is specified unambiguously, and also in the fact that the possibility of unobstructed rotation of the fluid, which has left the working wheel, is practically absent here.

SUMMARY OF THE INVENTION

The present invention is aimed at solving the problem of producing, on the basis of the prior art and own research, such a method of fluid heating and such a device for embodiment thereof that would confidently put into effect purposeful conversion of mechanical energy into thermal one with increased efficiency.

The problem is solved, according to the invention, by processing the fluid with the help of mechanical action thereon of the process of rotary motion with a definite linear velocity along a definite radius of rotation with superimposition of vibratory process of a definite frequency.

For this purpose, in the basic embodiment of the method of fluid heating are provided: the supply of the fluid to be processed into the space of the rotating working wheel; the discharge of the fluid to be processed from the space of the working wheel into a circular chamber formed by the peripheral cylindrical surface of the working wheel and the concentric surface of the stator through a series of outlet openings arranged on the peripheral cylindrical surface of the working wheel and equidistant along the circumference; discharge of the fluid from the circular chamber through at least one discharge opening. In this case the radius R of the peripheral cylindrical surface of the working wheel and the rotation frequency n thereof are determined by the number K of the outlet openings of the working wheel in the range according to empirical relationships

$$R = (1.05 ... 1.28) \, K \text{ (mm) and}$$

$$n = (3.6 ... 4.1) \, K^{-1.5} \cdot 10^6 \text{ (r.p.m.).}$$

Beyond the lifts of said ranges of parameters obtainable effect of abnormal fluid heating, as has been experimentally established, is expressed insufficiently.

In the most preferred embodiment of the method of fluid heating the radius R and the rotation frequency n of the working wheel are determined unambiguously by the selected number K of the outlet openings thereof according to empirical relationships

$$R = 1.1614 \, K \text{ (mm) and}$$

$$n = 3.8396 \, K^{-1.5} \cdot 10^6 \text{ (r.p.m.).}$$

In another preferred embodiment of the method of fluid heating the discharge of the fluid to be processed from the circular chamber formed by the peripheral cylindrical surface of the working wheel and concentric surface of the stator is effected through discharge openings arranged on the concentric surface of the stator, which are sequentially arranged opposite to the outlet openings of the working wheel in the course of rotation thereof.

In the described basic embodiment of the method of fluid heating in said ranges of selection of parameters such a temperature of fluid heating is fundamentally achieved that, as it was experimentally confirmed, it exceeds the temperature obtainable only as a result of hydraulic losses to such an extent and with such a stability that it is possible to speak about purposeful and rather efficient utilization of this embodiment of the method of fluid heating with practical purposes. The resultant positive total amount of the energy balance can be explained, not pretending to exhaustive completeness and correctness and keeping in mind the law of conservation of energy, by the release of latent energy of inner bonds of fluid at a molecular level as a result of periodical initiating substantially mechanical action on the fluid at critical frequencies and harmonics thereof. In the most preferred embodiment of the method of fluid heating, when said unambiguous values of parameters, determined experimentally, are chosen, the effect of surplus energy balance manifests itself at utmost. Another preferred embodiment of the method of fluid heating makes possible to improve the obtainable effect owing to a combined vibratory action exerted upon the fluid at first when the latter is dicharged through the outlet openings of the working wheel into the circular chamber, then when it is discharged from the circular chamber through the discharge openings made on the stator concentric surface.

The method of fluid heating, according to the invention, may be embodied only by means of the hereinafter described device, forming an integral part of the inventor's general intention and is not intended for use in other purposes.

The device for fluid heating in basic embodiment thereof comprises a rotor including a shaft running in bearings; at least one working wheel connected to the shaft and made as a disc with a peripheral annular wall having a cylindrical outer surface, wherein a series of outlet openings is made for fluid, said outlet openings being equidistant along the circumference; a stator containing a working wheel having an intake opening for fluid supply and a discharge opening for fluid outflow; a space for the fluid to be processed, said space being formed by the disc and a peripheral annular wall of the working wheel and a stator wall with an intake opening and adjoining thereto; a circular chamber for the fluid to be processed, said circular chamber being restricted in the radial direction by the peripheral annular wall of the working wheel and the stator concentric wall and communicates with the discharge opening for the fluid outflow; the characteristic geometric dimensions of the working wheel and circular chamber being:

$$R = (1.05 \ldots 1.28) \, K \, (mm), \text{ where}$$

K is the selected number of the outlet openings of the working wheel,
R is the radius of the outer cylindrical surface of the peripheral annular wall of the working wheel, and

$$\Delta R = (1.05 \ldots 1.28) \, B \, (mm), \text{ where}$$

B is the selected integer in the range of 1 ... K/2,
$\Delta R$ is the radial size of the circular chamber.

In the most preferred embodiment of the device for fluid heating the radius R and the size $\Delta R$ are respectively:

$$R = 1.1614 \, K \, (mm),$$

$$\Delta R = 1.1614 \, B \, (mm), \text{ where}$$

B is the selected integer in the range of 1 ... K/5.

In another preferred embodiment of the device for fluid heating a stator has a space adjoining a concentric wall thereof for fluid intake from a circular chamber communicating with a discharge opening for fluid outflow; the stator space communicating with the circular through the discharge openings made in the stator concentric wall in the location plane of the working wheel outlet openings and equidistant along the circumference; the number of the discharge openings of the circular chamber is 1 ... K.

Other features of the invention will be seen from the following detailed description of embodiments thereof.

BRIEF DESCRIPTION OF THE DRAWINGS

Below the invention is described in more detail by examples of practical embodiments thereof with reference to schematic drawings, wherein:

FIG.1       is a longitudinal axial section of the device for fluid heating in the basic and most preferred embodiments;
FIG.2,      4 is a partial transverse section of the circular chamber;
FIG. 3      is a longitudinal axial section of the device for fluid heating in one of the preferred embodiments.

DETAILED DESCRIPTION OF THE INVENTION

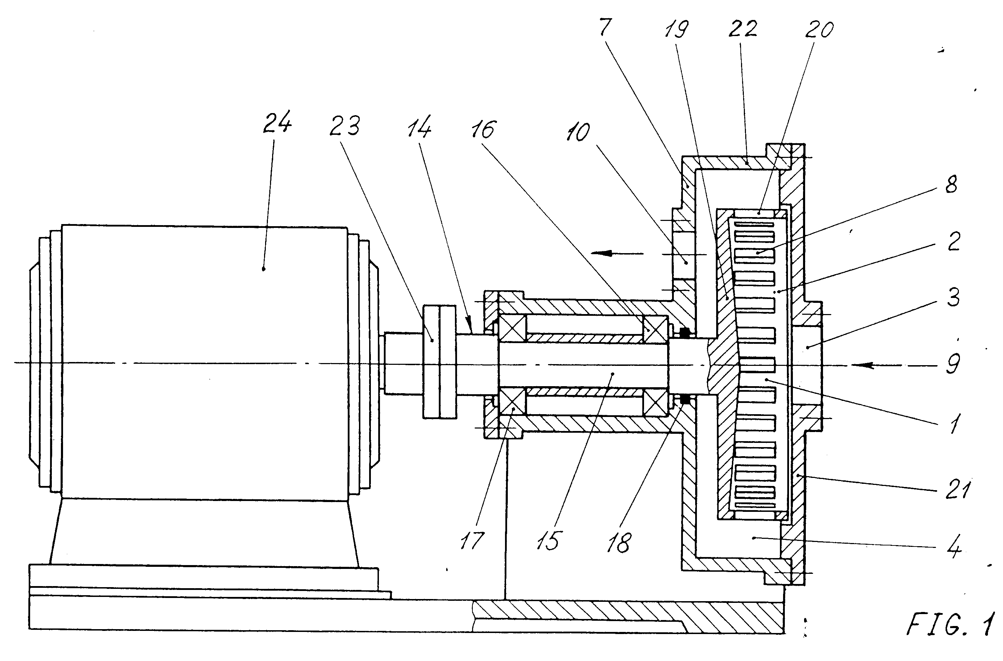

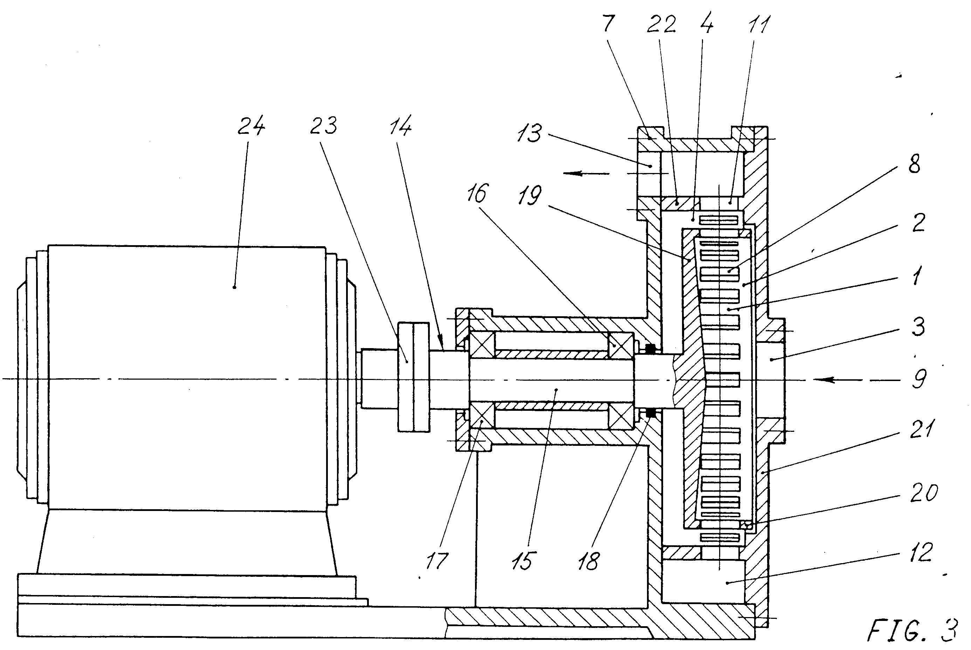

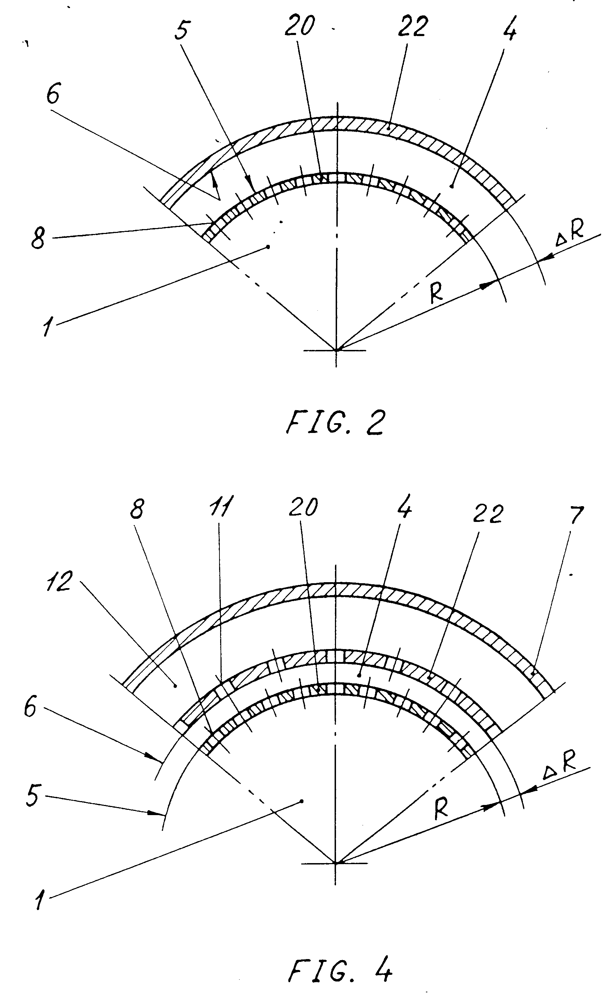

According to the basic embodiment (FIG. 1, 2) of the method of fluid heating by processing with the help of mechanical action, the fluid to be processed is supplied into the space 1 of the rotating working wheel 2 through the inlet opening 3. During rotation of the working wheel 2 the fluid to be processed is discharged from the space 1 thereof into the circular chamber 4 formed by the peripheral cylindrical surface 5 of the working wheel 2 and the concentric surface 6 of the stator 7 through a series of the outlet openings 8 arranged along the peripheral cylindrical surface 5 of the working wheel 2 and equidistant along the circumference. Within the limits of the circular chamber 4 the fluid to be processed, continuing rotation relative to the central axis 9 from the free-flow law, is subjected to the action of mechanical vibrations, caused by the interaction with the concentric surface 6 of the stator 7 of elementary fluid flows flowing out of each outlet opening 8 of the working wheel 2. The processed fluid is discharged from the circular chamber 4 through the discharge opening 10.

The radius R of the peripheral cylindrical surface 5 and the frequency of rotation n of the working wheel 2 are determined by the selected number K of the outlet openings 8 of the working wheel 2 in the range according to empirical relationships:

$$R = (1.05 \ldots 1.28)\, K \text{ (mm)},$$

$$n = (3.6 \ldots 4.1)\, K^{-1.5} \cdot 10^{6} \text{ (r.p.m.)}.$$

According to the most preferred embodiment of the method of fluid heating, the radius R and the frequency of rotation n of the working wheel 2 are determined unambiguously by the selected number K of the outlet openings 8 of the working wheel 2 according to empirical relationships:

$$R = 1.1614\, K \text{ (mm)},$$

$$n = 3.8396\, K^{-1.5} \cdot 10^{6} \text{ (r.p.m.)}.$$

According to another preferred embodiment (FIG.3,4) of the method of fluid heating, the discharge of the fluid to be processed from the circular chamber 4 formed by the peripheral cylindrical surface 5 of the working wheel 2 and the concentric surface 6 of the stator 7 is effected through one, several or a series of discharge openings 11 made on the concentric surface 6 of the stator 7. Said discharge openings 11 of the circular chamber 4 during rotation of the working wheel 2 are sequentially arranged opposite to the corresponding outlet openings 8 of the working wheel 2, causing periodical disturbances of flow and corresponding mechanical vibrations in the fluid. The fluid passed through the discharge openings 11 of the circular chamber 4 enters the space 12 of the stator 7, wherefrom the processed fluid is let out through the discharge opening 13.

The number of the discharge openings 11 of the circular chamber 4 is selected in the range of one to K, whereat it is taken into account that with the increase of the number of the discharge openings 11, all other things being equal, the process volumetric capacity rises adequately, but the temperature of fluid heating drops.

According to the basic embodiment (FIG.1, 2) of the device for effecting the described method of fluid heating, it comprises the rotor 14, containing a shaft 15 running in the bearings 16 and 17 and provided with a seal 18. The rotor 14 comprises at least one working wheel 2 connected to the shaft 15 and made as a disc 19 with a peripheral annular wall 20, having a cylindrical outer surface 5. In said wall 20 a series of outlet openings 8 is made for the fluid, equidistant along the circumference.

A stator 7 containing the working wheel 2 is provided with an intake opening 3 for the fluid supply for processing and a discharge opening 10 for letting out the processed fluid. A space 1 for admission of the fluid to be processed is formed by the disc 19 and the annular wall 20 of the working wheel 2 and adjoining wall 21 of the stator 7 with the intake opening 3. A circular chamber 4 for admission of the fluid to be processed is restricted in the radial direction with the annular wall 20 of the working wheel 2 and the concentric wall 22 of the stator 7 and communicates with the discharge opening 10 for letting out the processed fluid.

The characteristic geometric dimensions of the working wheel 2 and the circular chamber 4 constitute:

$$R = (1.05 \ldots 1.28)\, K \text{ (mm)},$$

$$\Delta R = (1.05 \ldots 1.28)\, B \text{ (mm), where}$$

K is the selected number of the outlet openings of the working wheel,
R is the radius of the cylindrical outer surface of the peripheral annular wall of the working wheel,
B is the selected integer in the range of 1 ... K/2,
$\Delta R$ is the radial size of the annular chamber.

In the most preferred embodiment (FIG.1,2) of the device for fluid heating the nominal value of the radius R constitutes unambiguously

$$R = 1.1614\, K \text{ (mm)},$$

while the nominal radial size $\Delta R$ constitutes

$$\Delta R = 1.1614\, B \text{ (mm), where}$$

B is the selected integer in the range of 1 ... K/5.

According to another preferred embodiment (FIG.3, 4) of the device for fluid heating the stator 7 has the space 12, adjoining the concentric wall 22 thereof to receive the fluid from the circular chamber 4 communicating with the discharge opening 13 for discharging the processed fluid. The space 12 of the stator 7 communicates with the circular wall 4 through the discharge openings 11 for discharging the fluid from the circular chamber 4 and simultaneously for letting it into the space 12, said discharge openings being made in the concentric wall 22 of the stator 7. Said discharge openings 11 lie in the arrangement plane of a series of the outlet openings 8 of the working wheel 2 and are equidistant along the circumference. The number of openings 11 constitutes from one to K, their number exceeding K being not advantageous due to a marked decrease, all other things being equal, of the thermal effect.

The rotor 14 is connected through the medium of the shaft 15 and coupling 23 to a driving means thereof with a calculated rotation frequency, such as the electric motor 24.

The rotor may comprise several working wheels fitted on one shaft, said working wheels being connected sequentially along the fluid flow. Each working wheel can be equipped with vanes.

Provision can be made of the inner or outer by-pass channel with a shut-off-and-control member for reversing a portion of the processed fluid from the outlet of the device to the input thereof for repeated processing.

The device as a whole can occupy any position in space.

The number K of the outlet openings 8 of the working wheel 2 is selected basing on the desired frequency of forced vibrations excited in the fluid in the sonic range, which is determined by empirical relationship

$$F = 63.993\ K^{-0.5}\ (kHz),$$

taking into account the achievable and advantageous geometric dimensions of the device as a whole.

The value of parameter B is selected in the above-mentioned ranges, depending on the physical properties of a particular fluid to be processed, especially on viscosity and the nauure of change during heating, taking into account reasonable geometric dimensions of the device as a whole.

The number of the discharge openings 11 for the fluid outflow from the circular chamber 4 is selected depending on the desirable ratio of volumetric capacity and fluid heating temperature.

The width of the outlet openings 8 of the working wheel 2 in the circumferential direction along the peripheral surface 5 thereof constitutes preferably 1/2 of their circumferential pitch along the circumference of the radius R. The width of the discharge openings 11 of the circular chamber 4 in the circumferential direction along the concentric surface 6 thereof, irrespective of their number, should not exceed preferably that of the outlet openings 8. The shape of the openings 8 and 11, as shown in the drawing of FIG.3, is preferred uniform, extended in the direction parallel to the central axis 9.

The device for fluid heating according to the invention operates in the following way:

In the basic and most preferred embodiments of the device (FIG.1,2 ) the fluid being processed is supplied through the intake opening 3 into the space 1 of the working wheel 2 in the direction shown by the arrow. The rotor 14 together with the working wheel 2 is set into rotation with the help of the electric motor 24 via the coupling 23 and shaft 15 at calculated rotation frequency n. In this case the fluid entering the space 1 of the working wheel 2 under pressure leaves the space 1 through a series of the outlet openings 8 made in the peripheral annular wall 20 of the working wheel 2, entering the circular chamber 4 limited with the annular wall 20 of the working wheel 2 and the concentric wall 22 of the stator 7. From the circular chamber 4 the processed fluid is discharged for consumption, utilization or further processing through the discharge opening 10 in the direction shown by the arrow.

In another preferred embodiment the device (FIG.3,4) operates similarly to that described above, with the exeption that the fluid being processed leaves the circular chamber 4 and enters the space 12 of the stator 7 through the discharge openings 11 made in the concentric wall 22 of the stator 7. From the space 12 the processed fluid is supplied for consumption, utilization or further processing through the discharge opening 13 in the direction shown by the arrow.

Below are given particular examples of practical embodiment of the method of fluid heating and the device for embodiment thereof, according to the invention (tables 1, 2).

Table 1

| Example of Embodiment According to FIG.1,2. Processed Fluid - Water | | | |
|---|---|---|---|
| Name | Symbol | Unit | Value |
| Number of working wheel outlet openings | K | pcs | 120 |
| Radius of working wheel peripheral cylindrical surface | R | mm | 140.0 |
| | | in. | 5.512 |
| Radial size of circular chamber | ΔR | mm | 9.3 |
| | | in. | 0.366 |
| Working wheel rotation frequency | n | r.p.m. | 2920 |
| Mechanical vibration frequency | F | kHz | 5.840 |
| Energy supplied | E | MJ | 46.8 |
| Capacity at open circulation | G | kg/min | 64.0 |
| Temperature increment at open circulation | ΔT | °C | 3.2 |
| Capacity at 50% enclosed circulation | GI | kg/min | 32.0 |
| Temperature at 50% enclosed circulation | ΔTI | °C | 6.4 |

Table 2

| Example of Embodiment According to FIG. 3, 4. Processed Fluid - Water | | | |
|---|---|---|---|
| Name | Symbol | Unit | Value |
| Number of working wheel outlet openings | K | pcs | 192 |
| Radius of working wheel peripheral cylindrical surface | R | mm | 223.0 |
| | | in. | 8.780 |
| Radial size of circular chamber | ΔR | mm | 41.8 |
| | | in. | 1.646 |
| Working wheel rotation frequency | n | r.p.m. | 1440 |
| Mechanical vibration frequency | F | kHz | 4.620 |
| Number of circular chamber discharge openings | KI | pcs | 120 |
| Energy supplied | E | MJ | 64.8 |
| Capacity at open circulation | G | kg/min | 102.8 |
| Temperature increment at open circulation | ΔT | °C | 3.0 |
| Capacity at 50% enclosed circulation | GI | kg/min | 51.4 |
| Temperature increment | ΔTI | °C | 6.0 |

INDUSTRIAL APPLICABILITY

The field of industrial application of the invention is rather vast and embraces many branches of industry in those numerous cases when fluid heating is required. Such cases are impossible to be stated in an exhaustive way. As individual examples, the following may be named:

- self-contained power-and-heat supply for small local stationary installations;

- heating of transport facilities and mobile installations;

- purposeful warming up of fluid directly in the process of its handling;

- purposeful incidental heating of fluid in diverse technological processes, etc.

The working wheel can be actuated by means of either a motor specially designed for similar purposes (electric, hydraulic, wind, mechanical, etc), or by moving and especially rotating parts of transport facilities (railway cars,etc).

The list of kinds of fluids to be processed is also rather vast - these are liquids proper from water to hydrocarbon and silicon-organic fluids, as well as solutions, emulsions and suspensions on their base, in a wide range of viscosity and other physical properties.

## Claims

1.  A method of fluid heating by processing with the help of mechanical action, comprising

    (1) supply of the fluid to be processed into a space of a rotating working wheel,
    (2) discharge of the fluid to be processed from the space of the working wheel into a circular chamber formed by the peripheral cylindrical surface of said working wheel and the concentric surface of a stator, at which
    (3) said discharge is effected through a series of outlet openings arranged on the peripheral cylindrical surface of the working wheel and equidistant along the circumference,
    (4) discharge of the fluid from said circular chamber through at least one discharge opening, at which
    (5) radius R of the peripheral cylindrical surface of the working wheel is determined by selected number K of the outlet openings of said working wheel according to empirical relationship

    $$R = (1.05 \ldots 1.28) \, K \, (mm),$$

    (6) rotation frequency n of the working wheel is determined by said value K according to empirical relationship

    $$n = (3.6 \ldots 4.1) \, K^{-1.5} \cdot 10^6 \, (r.p.m.).$$

2.  The method of fluid heating according to claim 1, wherein the radius R of the peripheral cylindrical surface of the working wheel is determined by the selected number K of the outlet openings of said working wheel according to empirical relationship

    $$R = 1.1614 \, K \, (mm),$$

    while the rotation frequency n of the working wheel is determined by the value K according to empirical relationship

    $$n = 3.8396 \, K^{-1.5} \cdot 10^6 \, (r.p.m.).$$

3.  The method of fluid heating according to claim 2, wherein the discharge of the fluid from the circular chamber formed by the peripheral cylindrical surface of the working wheel and the concentric surface of the stator is effected through the discharge openings arranged on the concentric surface of the stator, said discharge openings sequentially oppose the outlet openings of the working wheel during rotation of said wheel.

4.  A device for fluid heating by processing with the help of mechanical action, comprising

    (1) a rotor containing a shaft running in bearings,
    (2) at least one working wheel, connected to a shaft and made as a disc with a peripheral annular wall having a cylindrical outer surface, wherein a series of outlet openings is made for the fluid equidistant along the circumference,
    (3) a stator containing the working wheel having an intake opening for supply and a discharge opening for discharge of the fluid,
    (4) a space for the fluid to be processed formed by the disc and the annular wall of the working wheel and a stator wall with an intake opening adjoining said wheel,

(5) a circular chamber for the fluid to be processed, which is restricted in the radial direction by the peripheral annular wall of the working wheel and the stator concentric wall, and communicates with the discharge opening for discharge of the fluid,

at which the characteristic geometric dimensions of the working wheel and the circular chamber constitute:

(6) radius R of the cylindrical outer surface of the peripheral annular wall of the working wheel

$$R = (1.05 ... 1.28) \, K \text{ (mm), where}$$

K is the selected number of the outlet openings of the working wheel,

(7) radial size $\Delta R$ of the circular chamber

$$\Delta R = (1.05 ... 1.28) \, B \text{ (mm), where}$$

B is the selected integer in the range of 1 ... K/2,

(8) means for driving the rotor at the calculated rotation frequency.

**5.** The device for fluid heating according to claim 4, wherein the radius R of the cylindrical outer surface of the peripheral annular wall of the working wheel constitutes

$$R = 1.1614 \, K \text{ (mm), where}$$

K is the selected number of the outlet openings of the working wheel, while the radial size $\Delta R$ of the circular constitutes

$$\Delta R = 1.1614 \, B \text{ (mm), where}$$

B is the selected integer in the range of 1 ... K/5.

**6.** The device for fluid heating according to claim 5, wherein

(1) the stator has a space adjoining the concentric wall thereof for fluid intake from the circular chamber, said space communicating with the discharge opening for discharge of the fluid, at which

(2) the stator space communicates with the circular chamber through the discharge openings, made in the stator concentric wall in the arrangement plane of the outlet openings of the working wheel and equidistant along the circumference,

(3) the number of the discharge openings of the circular chamber constitutes 1 ... K.

**Amended claims under Art. 19.1 PCT**

1. A method of fluid heating by processing with the help of mechanical action, comprising

(1) supply of the fluid to be processed into a space of a rotating working wheel,

(2) discharge of the fluid to be processed from the space of the working wheel into a circular chamber formed by the peripheral surface of said working wheel and the concentric surface of a stator, at which

(3) said discharge is effected through a series of outlet openings arranged on the peripheral surface of the working wheel and equidistant along the circumference,

(4) discharge of the fluid from said circular chamber is effected through at least one discharge opening, at which

(5) radius R of the peripheral surface of the working wheel is determined by selected number K of the outlet openings of said working wheel according to empirical relationship

$$R = (1.05 ... 1.28) \, K \text{ (mm), while}$$

(6) rotation frequency n of the working wheel is determined by said value K according to empirical relationship

$$n = (3.6 ... 4.1) \, K^{-1.5} \cdot 10^{6} \text{ (r.p.m.).}$$

2. The method of fluid heating according to claim 1, wherein the radius R of the peripheral surface of the working wheel is determined nominally by the selected number K of the outlet openings of said working wheel according to empirical relationship

$$R = 1.1614 \ K \ (mm),$$

while the rotation frequency n of the working wheel is determined nominally by the value K according to empirical relationship

$$n = 3.8396 \ K^{-1.5} \cdot 10^{6} \ (r.p.m.).$$

3. The method of fluid heating according to claims 1 or 2, wherein the discharge of the fluid from the circular chamber formed by the peripheral surface of the working wheel and the concentric surface of the stator is effected through the discharge openings arranged on the concentric surface of the stator, said discharge openings sequentially oppose the outlet openings of the working wheel during rotation of said wheel.

4. A device for fluid heating by processing with the help of mechanical action, comprising

(1) a rotor containing a shaft running in bearings, and
(2) at least one working wheel, connected to a shaft and made as a disc with a peripheral annular wall, wherein a series of outlet openings is made for the fluid, equidistant along the circumference, and
(3) a stator containing the working wheel having an intake opening for supply and a discharge opening for discharge of the fluid, as well as
(4) a space for the fluid to be processed, communicating with a stator intake opening, and
(5) a circular chamber for the fluid to be processed, which is restricted in the radial direction by the peripheral annular wall of the working wheel and the stator concentric wall, and communicates with the discharge opening for discharge of the fluid,
at which the characteristic geometric dimensions of the working wheel and the circular chamber constitute:
(6) radius R of the outer surface of the peripheral annular wall of the working wheel

$$R = (1.05 \dots 1.28) \ K \ (mm), \ where$$

K is the selected number of the outlet openings of the working wheel,
(7) radial size $\Delta R$ of the circular chamber

$$\Delta R = (1.05 \dots 1.28) \ B \ (mm), \ where$$

B is the selected integer in the range of 1 ... K/2, and

(8) a means for driving the rotor at the calculated rotation frequency.

5. The device for fluid heating according to claim 4, wherein the radius R of the outer surface of the peripheral annular wall of the working wheel constitutes nominally

$$R = 1.1614 \ K \ (mm), \ where$$

K is the selected number of the outlet openings of the working wheel, while the radial size $\Delta R$ of the circular chamber constitutes nominally

$$\Delta R = 1.1614 \ B \ (mm), \ where$$

B is the selected integer in the range of 1 ... K/5.

6. The device for fluid heating according to claims 4 or 5, wherein

(1) the stator has a space for fluid intake from the circular chamber, said space communicating with the discharge opening for discharge of the fluid, at which
(2) the stator space communicates with the circular chamber through the discharge openings, made in the stator concentric wall in the arrangement plane of the series of the outlet openings of the working wheel and equidistant along the circumference, while

(3) the number of the discharge openings of the circular chamber constitutes 1 ... K.

FIG. 1

EP 0 833 114 A1

FIG. 3

FIG. 2

FIG. 4

## INTERNATIONAL SEARCH REPORT

| International application No. |
| --- |
| PCT/RU95/00070 |

| A. | CLASSIFICATION OF SUBJECT MATTER |
| --- | --- |

Int. Cl.$^6$   F24J 3/00

According to International Patent Classification (IPC) or to both national classification and IPC

| B. | FIELDS SEARCHED |
| --- | --- |

Minimum documentation searched (classification system followed by classification symbols)

Int. Cl.$^6$   F24J 3/00, F24H 1/00

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT | |
| --- | --- | --- |
| Category* | Citation of document, with indication, where appropriate, of the relevant passages | Relevant to claim No. |
| A | FR, A, 2158968, (OPFERMANN A.), 15 June 1973 (15.06.73) | 1-6 |
| A | FR, A, 2549584, (KUBOYAMA Nobuyoshi), 25 January 1985 (25.01.85) | 1-6 |
| A | FR, A1, 2489939, (SOCITEC SOCIETE POUR LE COMMERCE INTERNATIONAL et al), 12 March 1982 (12.03.82) | 1-6 |
| A | DE, A1, 3106341, (IHNEN WILHELM), 23 December 1982 (23.12.82) | 1-6 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance: the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance: the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 3 October 1995 (03.10.95) | 5 December 1995 (03.12.95) |
| Name and mailing address of the ISA/ | Authorized officer |
| | |
| Facsimile No. | Telephone No. |

Form PCT/ISA/210 (second sheet) (July 1992)